# EUROPÄISCHE PATENTSCHRIFT

(11) **EP 3 289 192 B1**
(45) Veröffentlichungstag und Bekanntmachung des Hinweises auf die Patenterteilung: **12.06.2019**
(21) Anmeldenummer: 16723669.4
(22) Anmeldetag: 26.04.2016
(51) Int. Cl.: F01N 3/04, F01N 3/10, F01N 9/00, F02D 41/02

(54) **VERFAHREN UND VORRICHTUNG ZUR OPTIMIERUNG DES BETRIEBSVERHALTENS EINES KRAFTFAHRZEUGS MIT BRENNKRAFTMASCHINE**
METHOD AND APPARATUS FOR OPTIMIZING THE OPERATING BEHAVIOR OF A MOTOR VEHICLE HAVING AN INTERNAL COMBUSTION ENGINE
PROCÉDÉ ET DISPOSITIF POUR OPTIMISER LE COMPORTEMENT DE FONCTIONNEMENT D'UN VÉHICULE AUTOMOBILE COMPRENANT UN MOTEUR À COMBUSTION INTERNE

(30) Priorität: 29.04.2015 DE 202015003159 U; 03.11.2015 DE 102015014150
(43) Veröffentlichungstag der Anmeldung: 07.03.2018
(73) Patentinhaber: Technische Universität Darmstadt, 64289 Darmstadt (DE)
(72) Erfinder: BEIDL, Christian, 64285 Darmstadt (DE); KLUIN, Matthias, 55126 Mainz (DE); LENZEN, Bernd, 64380 Roßdorf (DE); MARTIN, Sebastian, 64283 Darmstadt (DE)
(74) Vertreter: Wallinger, Michael
(86) Internationale Anmeldenummer: PCT/EP2016/059261
(87) Internationale Veröffentlichungsnummer: WO 2016/174015

(56) Entgegenhaltungen:
- EP-A1- 2 607 645
- WO-A2-2010/118911
- DE-A1-102006 023 469
- DE-A1-102012 104 155
- DE-A1-102013 009 277
- US-A1- 2005 173 523
- US-A1- 2015 047 318
- JOSEVSKI MARTINA ET AL: "Multi-time scale model predictive control framework for energy management of hybrid electric vehicles", 53RD IEEE CONFERENCE ON DECISION AND CONTROL, IEEE, 15 December 2014 (2014-12-15), pages 2523-2528, XP032733625, DOI: 10.1109/CDC.2014.7039774 ISBN: 978-1-4799-7746-8 [retrieved on 2015-02-11]

## Beschreibung

Die vorliegende Erfindung betrifft ein Verfahren und eine Vorrichtung zur Optimierung des Betriebsverhaltens von Kraftfahrzeugen, welche zumindest teilweise von einer Brennkraftmaschine angetrieben werden.

Ein wesentliches Ziel bei der Entwicklung des Antriebs eines Kraftfahrzeugs mit Verbrennungskraftmaschine ist das Abgasverhalten. Die meisten Staaten oder supranationale Behörden haben Gesetze oder Verordnungen erlassen, in denen Grenzwerte für die Schadstoffemissionen eines Fahrzeugs festgelegt sind. In der Europäischen Union ist dies beispielsweise die Verordnung 715/2007/EG, in denen die ab 1. September 2009 geltende Euro-5-Norm und die ab 1. September 2014 geltende Euro-6-Norm enthalten sind. Dort werden die Grenzwerte für den CO-Ausstoß, den HC+NOX-Ausstoß, den NOX-Ausstoß, den PM-Ausstoß und den PN-Ausstoß festgelegt. Dabei bedeutet PM die Partikelmasse, üblicherweise auch als Feinstaub bezeichnet, und PN die Partikelanzahl, entsprechend der englischen Bezeichnung "particle number". Eine Reihe weiterer Verordnungen regelt die Prüfung dieser Grenzwerte bei Fahrzeugen. In den USA werden entsprechende Grenzwerte von der Environmental Protection Agency für die meisten Bundesstaaten festgelegt, wobei Kalifornien eine eigene Gesetzgebung hat.

Um die oben genannten Abgasnormen und insbesondere zukünftige Abgasnormen zu erfüllen, ist eine sehr komplexe Steuerung der Brennkraftmaschinen erforderlich. Dabei werden abhängig vom jeweiligen Lastpunkt, das ist das vom Motor aufzubringende Drehmoment bei einer bestimmten Drehzahl, also eine Kombination von Drehmoment und Drehzahl, die sogenannten variablen Stellgrößen des Motors, das sind z. B. der Zeitpunkt und die Menge der Kraftstoffeinspritzung, der Zeitpunkt des Öffnens und Schließens der Ventile, der Ventilhub selbst, die Luftzufuhr des Motors durch einen Verdichter, die Abgasrückführrate, bei einem Otto-Motor der Zündwinkel etc. in Abhängigkeit von der Stellung des Gaspedals und den Umgebungsbedingungen, wie z. B. der Lufttemperatur, der Kühlwassertemperatur etc., im Zusammenwirken mit einer Abgasnachbehandlungseinrichtung so optimiert, dass auf der einen Seite die jeweiligen Abgasgrenzwerte eingehalten werden, dass aber auf der anderen Seite das Verhältnis von Fahrbarkeit und Verbrauch für die vom Entwickler angestrebte Fahrcharakteristik des Fahrzeugs optimal ist.

WO 2010/118911 beschreibt ein Verfahren zum Betreiben eines Kraftfahrzeugs, wobei ein aktueller Aufenthaltsort des Kraftfahrzeugs ermittelt und das Kraftfahrzeug aus einem ersten Betriebsmodus in einen zweiten Betriebsmodus versetzt wird, sofern anhand des ermittelten Aufenthaltsorts ein Einfahren des Kraftfahrzeugs in einen Aufenthaltsbereich festgestellt wird, für welchen ein Betriebsmodus des Kraftfahrzeugs vorgegeben ist.

DE 10 2006 023469 beschreibt eine prädiktive Beeinflussung von Abgaseigenschaften zur Reduzierung des Turbolochs. Durch Auswertung von Fahrstreckendaten, die beispielsweise über ein angeschlossenes Navigationssystem, eine manuelle Eingabe von Fahrstreckendaten oder eine andersartige Hinterlegung dieser Fahrstreckendaten bereitgestellt werden, werden zukünftige Leistungssteigerungspunkte der Brennkraftmaschine zu diesem Zweck vorhergesagt.

JOSEVSKI MARTINA ET AL: "Multi-time scale model predictive control framework for energy management of hybrid electric vehicles" beschreibt eine Regelkaskade mit zwei modellprädiktiven Reglern, die mit unterschiedlichen Zeithorizonten betrieben werden.

Die vorliegende Erfindung stellt sich daher die Aufgabe eine Vorrichtung und/oder ein Verfahren anzugeben, mit der das Verhalten eines Fahrzeugs, insbesondere das Schadstoff- und/oder CO2-Emissionsverhalten einer Brennkraftmaschine, optimiert werden kann.

Diese Aufgabe wird erfindungsgemäß durch ein Kraftfahrzeug nach Anspruch 1 gelöst. Ein bevorzugtes Verfahren ist Gegenstand des Anspruchs 13. Zu bevorzugende Weiterbildungen der Erfindung sind Gegenstand der Unteransprüche.

Das erfindungsgemäße Kraftfahrzeug erlaubt eine besonders wirkungsvolle Schadstoffemissionssteuerung des Fahrzeugs.

Die Grundidee der Erfindung lässt sich insbesondere als prädiktive Abgassteuerung bezeichnen. Dies bedeutet, dass im Voraus berechnet wird, wie sich das Betriebsverhalten des Kraftfahrzeugs voraussichtlich ändern wird und welchen Einfluss dies auf die Schadstoffemission des Kraftfahrzeugs hat. Auf dieses vorausberechnete Betriebsverhalten wird reagiert, indem Parameter, die Einfluss auf die Abgasemission haben, frühzeitig verändert werden. Dabei geht es nicht nur um die Brennkraftmaschine selbst und um die Art und Weise wie dort Schadstoffemissionen entstehen, sondern es geht darum, die gesamte Abgasreinigung mit in die Optimierung des Betriebsverhaltens einzubeziehen.

Ist also beispielsweise absehbar, dass die Enthalpie des Abgases nicht mehr ausreicht, um eine ausreichende Reinigung des Abgases in einem bestimmten Betriebspunkt sicherzustellen, wird die Temperatur der Elemente der Abgasnachbehandlungseinrichtung vor Erreichen dieses Betriebspunktes erhöht, um dann ausreichend hohe Temperaturen zur Verfügung zu haben, um bei Erreichen des vorausgesagten Betriebspunktes die Bedingungen geschaffen zu haben, das Abgas optimal bearbeiten und reinigen zu können.

Diese Vorgehensweise stellte eine grundlegende Abkehr von der bisher üblichen Optimierung der Betriebsstrategie einer Brennkraftmaschine dar, da der Fokus nicht auf einer Optimierung von Fahrbarkeit und/oder Treibstoffeinsparung liegt, sondern sich beide Aspekte der Reduzierung des Schadstoffausstoßes unterordnen und gegebenenfalls auch Einbußen bei Fahrbarkeit und/oder Treibstoffverbrauch in Kauf genommen werden, um den Schadstoffausstoß zu reduzieren. Ist eine höhere Abgasenthalpie erforderlich, um die gewünschte Limitierung der Schadstoffemission zu erreichen, wird der Betrieb der Brennkraftmaschine in einer gewissen Weise verändert, insbesondere "verschlechtert". Dies geschieht beispielsweise, indem bei einem Otto-Motor der Zündwinkel so verändert wird, dass die Abgastemperatur ansteigt. Durch die höhere Temperatur des Abgases ist es dann bei Erreichen des vorhergesagten Betriebspunktes möglich, die dann entstehenden Schadstoffe zu konvertieren.

Die zum Aufheizen des Abgases benötigte Energie kann dabei durch die Brennkraftmaschine nicht in Bewegungsenergie umgewandelt werden. Um dennoch das bereitgestellte Drehmoment wenigstens im Wesentlichen konstant, insbesondere weitestgehend konstant, zu halten, wird deshalb zum Beispiel die angesaugte Luft entdrosselt und/oder aufgeladen.

Unter einem "Kraftfahrzeug" im Sinne der vorliegenden Erfindung ist insbesondere ein durch einen Motor angetriebenes Landfahrzeug zu verstehen, also insbesondere Personenkraftwagen, Lastkraftwagen, Krafträder und Zugmaschinen. Das Kraftfahrzeug kann dabei als ausschließlich mit einer Brennkraftmaschine angetriebenes Kraftfahrzeug, welches vorzugsweise eine Start-Stopp-Automatik und/oder eine Bremsenergierückgewinnungseinrichtung zum Laden einer Starterbatterie aufweist, ausgebildet sein. Des Weiteren kann das Kraftfahrzeug als Mildhybrid mit wenigstens einer eine Brennkraftmaschine unterstützenden elektromotorischen Einrichtung oder als Vollhybrid ausgebildet sein, welcher eine Brennkraftmaschine aufweist, aber in der Lage ist allein mit Hilfe der elektromotorischen Einrichtung zu fahren. Das Kraftfahrzeug in Form eines Mild- oder Vollhybrid kann hinsichtlich der Systemstruktur als serieller Hybrid, als paralleler Hybrid, als leistungsverzweigender Hybrid, als Hybrid mit mechanischem Durchtrieb und/oder als straßengekoppelter Hybrid, bei dem die eine Achse durch die Brennkraftmaschine und die andere Achse von der elektromotorischen Einrichtung angetrieben wird, ausgebildet sein. Unabhängig von der Systemstruktur kann der Mild- oder Vollhybrid auch, in Form eines sog. Plug-In-Hybrids, von außen mit elektrischer Energie versorgt werden.

Unter einer "Brennkraftmaschine" im Sinne der vorliegenden Erfindung ist insbesondere eine Maschine zu verstehen, die mechanische Arbeit verrichtet, indem sie chemische Energie bei einem Verbrennungsvorgang in Bewegungsenergie umwandelt. Dazu gehören Brennkraftmaschinen mit äußerer Verbrennung und mit innerer Verbrennung und/oder mit zyklischer Verbrennung und/oder mit kontinuierlicher Verbrennung und/oder mit selbstzündender Verbrennung und/oder mit fremdzündender Verbrennung. Insbesondere wird unter einer Brennkraftmaschine ein Otto- oder Dieselmotor als Hubkolbenmotor, Drehkolbenmotor oder in anderer Bauweise verstanden.

Unter einer "Sensoreinrichtung" im Sinne der vorliegenden Erfindung ist eine Einrichtung zu verstehen, welche zumindest aus einem (Messgrößen-)Aufnehmer besteht, der eine physikalisch messbare Messgröße erfasst. Die "Sensoreinrichtung" im Sinne der vorliegenden Erfindung kann weitere Elemente der Messkette umfassen, wie zum Beispiel Verstärker, Analog/Digital-Wandler, Codierer und dergleichen. Auch eine Empfangseinrichtung zum Empfang von drahtlos übertragenen Signalen von Sendeeinrichtungen in der Umgebung des Kraftfahrzeugs, insbesondere von anderen Kraftfahrzeugen und/oder der Infrastruktur und/oder von Satelliten stellen "Sensoreinrichtungen" im Sinne der vorliegenden Erfindung dar.

Unter "fahrzeugbezogenen Zustandsparametern" im Sinne der vorliegenden Erfindung sind vor allem fahrzeuginterne Zustandsparameter zu verstehen, welche durch fahrzeugeigene Sensoreinrichtungen bestimmt werden. Die fahrzeugbezogenen Zustandsparameter betreffen insbesondere den Antriebsstrang, die Fahrzeuggeschwindigkeit, das geforderte und/oder bereitgestellte Drehmoment, die Stellung eines Fahrmodusschalters, die Stellung des Lenkrades sowie weitere vom Fahrer verstellbare oder betätigbare Einrichtungen, wie z.B. die Stellung der Pedalerie, des Ganghebels, des Blinkerhebels, des Scheibenwischerhebels und dergleichen.

Unter "umgebungsbezogenen Zustandsparametern" im Sinne der vorliegenden Erfindung sind im Wesentlichen Zustandsparameter zu verstehen, welche das Umfeld, in welchem sich das Kraftfahrzeug bewegt, charakterisieren. Die umgebungsbezogenen Zustandsparameter werden insbesondere aus der Fahrerassistenzsensorik, wie vorzugsweise Radar, Lidar, Ultraschall, Kamerasysteme, Kamerasysteme mit nachgeschalteter Schildererkennnung, und dergleichen, sowie aus Navigationsdaten, und hier vorzugsweise Straßenverlauf, Topographie, Geschwindigkeitslimits, Vorfahrtsregelungen, Verkehrsdichte, Baustellen, Streckenzustand, Höhe über dem Meeresspiegel und dergleichen bestimmt. Des Weiteren können umgebungsbezogene Zustandsparameter auch von anderen Fahrzeugen, insbesondere deren Position, Geschwindigkeit oder Fahrtrichtung, und Gefahrensituationen und dergleichen, über eine Car-to-X-Schnittstelle, insbesondere eine Car-to-Car-Schnittstelle und/oder eine Car-to-Infrastructure-Schnittstelle, z.B. über Telekommunikationseinrichtungen, wie Mobiltelefone und dergleichen, übermittelt werden.

Unter einer "Bereitstellung" eines Zustandsparameters im Sinne der vorliegenden Erfindung wird neben einer analogen und/oder digitalen Messsignalaufbereitung auch eine Weiterverarbeitung, von Messwerten und/oder anderen Informationen, insbesondere durch die Steuereinrichtung, verstanden. Diese Weiterverarbeitung umfasst insbesondere Berechnungen, welche die Ermittlung eines Zustandsmodells als einer, insbesondere optionalen, Vorstufe der Fahrzeugverhaltensprognose und/oder die Berechnung der Fahrzeugverhaltensprognose, insbesondere direkt, vorbereiten.

"Umweltbezogene Zustandsparameter" im Sinne der vorliegenden Erfindung sind Zustandsparameter, welche insbesondere das aktuelle Wetter und den Straßenzustand, in welchem sich das Kraftfahrzeug bewegt, betreffen. Entsprechende Parameter sind bevorzugt die Temperatur und/oder der Luftdruck der Umgebungsluft, insbesondere zur Vorhersage von Wetterveränderungen, das Vorliegen von Regen- und/oder Schneefall, Regenniederschlags- und/oder Schneefallmenge und auch die auf dem Untergrund befindliche Schneemenge, Glättegrad etc.

Unter einer "Stelleinrichtung" im Sinne der vorliegenden Erfindung ist insbesondere eine Einrichtung zu verstehen, welche dafür vorgesehen ist, einen aktuellen Ist-Wert einer Stellgröße wenigstens einer Komponente durch Änderung einer Betriebsgröße dieser wenigstens einen Komponente zu ändern und insbesondere einem vorgegebenen Sollwert für die Stellgröße anzunähern.

Unter einer "Stellgröße" im Sinne der vorliegenden Erfindung ist insbesondere ein veränderbarer Parameter zu verstehen, welcher wenigstens zwei verschiedene Werte annehmen kann, wobei ein Wert auch null sein kann. Stellgrößen sind insbesondere ein Aufladungsgrad durch eine Zusatzladevorichtung, eine Drosselklappenstellung, eine Bypassklappenstellung und dergleichen.

Unter einer "Zusatzladervorrichtung" im Sinne der vorlegenden Erfindung ist insbesondere ein elektrisch angetriebener Zusatzlader zu verstehen, welcher beispielsweise als elektrischer Zusatzverdichter oder Verdrängerlader ausgebildet ist. Die Zusatzladervorrichtung kann hierbei eine wenigstens im Wesentlichen eigenständige Einheit in einem Brennkraftmaschinenluftpfad eines Kraftfahrzeugs sein oder in einen, insbesondere elektrifizierten, Turbolader integriert sein, insbesondere in Form eines Turboladers mit integriertem Elektromotor.

Unter einer "Steuereinrichtung" im Sinne der vorliegenden Erfindung ist ein zentrales oder dezentrales System zu verstehen, welches dafür vorgesehen ist, Informationen zu empfangen, zu verarbeiten, auszugeben und gegebenenfalls Daten beliebiger Art, insbesondere ausgewählte Daten, zu speichern. Eine Steuereinrichtung im Sinne der vorliegenden Erfindung weist insbesondere wenigstens eine zentrale Verarbeitungseinheit (central processing unit, CPU) sowie eine Speichereinrichtung auf. Des Weiteren kann die Steuereinrichtung En-Codierer und/oder De-Codierer aufweisen, welche empfangene Informationen für die Verarbeitung durch die CPU aufbereiten und/oder abzugebende Informationen für die Abgabe, d.h. die Übertragung, insbesondere über ein BUS-System, vorbereiten.

Unter einem "Zustandsmodell" im Sinne der vorliegenden Erfindung ist insbesondere ein Datensatz oder sind insbesondere mehrere Datensätze und/oder ein oder mehrere Rechenmodelle zu verstehen, welche zumindest näherungsweise den Ist-Zustand des Kraftfahrzeugs (z.B. Geschwindigkeit, Lenkradstellung, Gang, Gesamtgewicht), insbesondere in seiner aktuellen Umgebung (z.B. Straßenbelag, Wetter, Hindernisse, Straßenverlauf) und/oder in seiner aktuellen Fahrsituation (z.B. Beschleunigen, bei im Wesentlichen gleichbleibender Geschwindigkeit Fahren, Abbremsen, Überholen, Abbiegen etc.) beschreiben.

Unter einer "Fahrzeugverhaltensprognose" im Sinne der vorliegenden Erfindung ist die Vorhersage einer zu erwartenden Veränderung bzw. einer Beibehaltung des Fahrzeugverhaltens zu verstehen.

Die Fahrzeugverhaltensprognose weist zwei oder mehr voneinander verschiedene Prognosehorizonte auf, die sich in ihrer zeitlichen Vorausschau unterscheiden. Weiter weist die Fahrzeugverhaltensprognose eine Kurzzeitprognose und eine Langzeitprognose auf, wobei sich die Fahrzeugverhaltensprognose aus der Kurzzeitprognose und der Langzeitprognose zusammensetzt.

Der Prognosehorizont der Kurzzeitprognose liegt im Bereich von 10 ms bis 10 s, insbesondere im Bereich von 100 ms bis 7 s, bevorzugt im Bereich vom 500 ms bis 5 s. Im Zuge der Berechnung der Fahrzeugverhaltensprognose werden insbesondere auch mehrere mögliche Szenarien ermittelt und hinsichtlich ihrer Eintretenswahrscheinlichkeit bewertet. Insbesondere werden die möglichen Szenarien unter Gewichtung mittels ihrer Eintretenswahrscheinlichkeit zu einer szenarienübergreifenden Fahrzeugverhaltensprognose zusammengefasst.

Die Langzeitprognose erfasst einen Prognosehorizont von 1 min bis 20 min oder mehr, und ist insbesondere dafür vorgesehen, langfristige Parameter, wie beispielsweise den aktuellen oder erwarteten Aufenthalt in einer Umweltzone abzubilden. Beispielsweise "weiß" die Steuereinrichtung des Kraftfahrzeugs, z.B. unter Ausnutzung der Daten des Navigationssystems, im Voraus, welche Wegstrecke das Kraftfahrzeug voraussichtlich zurücklegen wird und kann das Kraftfahrzeug entsprechend darauf vorbereiten, z.B. indem der Ladestand der Batterie angepasst wird, wenigstens eine Komponente der Abgasnachbehandlungseinrichtung auf eine entsprechende Temperatur gebracht wird oder dergleichen.

Unter der "Fahrbarkeit" im Sinne der vorliegenden Erfindung ist die qualitative und/oder quantitative Bewertung, insbesondere, aber nicht nur bei Veränderungen eines oder mehrerer fahrzeugbezogener Parameter, und insbesondere des Verhaltens eines Kraftfahrzeugs, im Hinblick auf Beschleunigung, Gaswegnahme, Bremsen, Drehzahl- und Momentschwankungen beim Gangwechsel, und dergleichen zu verstehen. Maßstab für dieses Verhalten ist der subjektive Eindruck des Fahrers und der Passagiere, der insbesondere durch die Bewegung der Karosserie, und insbesondere durch Schwingungen in Längsrichtung, hervorgerufen wird.

Nach einer bevorzugten Ausführungsform sind die der Bewertung der Emissionsprognose zugrundeliegenden vorgegebenen Kriterien, insbesondere in Abhängigkeit von wenigstens einem der fahrzeug- und/oder umgebungs- und/oder umweltbezogenen Zustandsparameter, veränderbar.

Nach einer bevorzugten Ausführungsform weist das Kraftfahrzeug eine situativ variable Motorkalibrierung auf. Hierdurch ist es möglich, Kriterien, wie zum Beispiel die fahrzeugintern definierte Abgasgrenzwerte, limitierte Prozessprodukte und dergleichen, die der Betriebsstrategie der Motorsteuerung zugrunde liegen, zu ändern.

Diese Änderung kann bei einer bevorzugten Ausführungsform automatisch, d.h. insbesondere ohne Eingriff des Fahrers, vorgenommen werden, wofür vorzugsweise Informationen von außerhalb des Kraftfahrzeugs durch ein externes, drahtlos übertragenes Signal herangezogen wird oder aber auch positionsgesteuert, in dem vorzugsweise ein GPS-Signal oder ein diesem ähnliches Signal dazu herangezogen wird, die Einfahrt oder die Ausfahrt aus einer bestimmten Fahrzone zu erkennen.

In vielen deutschen Großstädten gibt es auch heute schon sogenannte Umweltschutzzonen, in die Kraftfahrzeuge nur einfahren dürfen, wenn sie ein einer bestimmten Norm entsprechendes Abgasverhalten aufweisen. Dies wird derzeit so gehandhabt, dass nur Kraftfahrzeuge einfahren dürfen, welche im Falle eines Otto-Motors einen geregelten Katalysator aufweisen oder deren Abgasverhalten im Falle eines Diesel-Motors der Euro-Norm 4 entspricht. Mit dem erfindungsgemäßen Verfahren ist es möglich, die Schadstoffbelastung in solchen Zonen noch weiter zu reduzieren. Sobald das Kraftfahrzeug in eine solche Zone einfährt, wird die Betriebsstrategie so verändert, dass die Abgasemissionen weiter vorzugsweise entsprechend um bestimmte genormte Werte reduziert werden. Diese Betriebsstrategie kann ebenfalls so gesteuert werden, dass damit, insbesondere in bestimmten stationären und/oder dynamischen Fahrzuständen, eine Reduzierung des von der Brennkraftmaschine abgegebenen Drehmoments und/oder der Leistung bewirkt wird. Wird eine solche Betriebsstrategie konsequent umgesetzt, ist es möglich, die Brennkraftmaschine so zu betreiben, dass das Schadstoffniveau der abgegebenen Abgase auf dem der angesaugten Umgebungsluft liegt oder bevorzugt sogar darunter liegt.

Nach einer Ausführung wird das Schadstoffniveau der abgegebenen Abgase des erfindungsgemäßen Kraftfahrzeugs in folgende Kategorien unterteilt:
(a) Abgasemissionen, welche für zumindest einen, insbesondere alle, Parameter unterhalb, insbesondere deutlich unterhalb, der vorgegebenen Grenzwerte liegen;
(b) Abgasemissionen, welche zumindest für einen, insbesondere alle, Parameter in einem Wertebereich der Umgebungsluft liegen; und
(c) Abgasemission, welche zumindest für einen, insbesondere alle, Parameter unterhalb, insbesondere deutlich unterhalb, der Umgebungsluft liegen.

Das Kraftfahrzeug der vorliegenden Erfindung ist nach einer Ausführung dazu eingerichtet, das Schadstoffniveau der abgegebenen Abgase zumindest auf Abgasemissionen zu beschränken, welche für zumindest einen, insbesondere alle, Parameter unterhalb, insbesondere deutlich unterhalb, der vorgegebenen Grenzwerte liegen.

"Deutlich unterhalb" im Sinne der vorliegenden Erfindung bedeutet insbesondere wenigstens 10 %, insbesondere 20 %, insbesondere 30 % oder mehr unterhalb der vorgegebenen Grenzwerte, insbesondere gemessen unmittelbar am in Abgasströmrichtung hinteren Ende des Abgasrohrs.

Das Kraftfahrzeug der vorliegenden Erfindung ist nach einer Ausführung dazu eingerichtet, das Schadstoffniveau der abgegebenen Abgase zumindest auf Abgasemissionen zu beschränken, welche zumindest für einen, insbesondere alle, Parameter in einem Wertebereich der Umgebungsluft liegen.

"In einem Wertebereich" im Sinne der vorliegenden Erfindung bedeutet insbesondere in einem Bereich von +/- 20 %, insbesondere +/- 10 %, insbesondere +/- 5 % um den entsprechenden Parameterwert in der unmittelbaren Umgebung des Kraftfahrzeugs, insbesondere jedoch nicht im Bereich der ausströmenden Abgase des Kraftfahrzeugs. Nach einer bevorzugten Ausführung werden die Abgase des Kraftfahrzeugs unmittelbar am in Abgasströmrichtung hinteren Ende des Abgasrohrs gemessen und insbesondere mit dem Parameterwert der unmittelbaren Umgebung in Beziehung gesetzt.

Das Kraftfahrzeug der vorliegenden Erfindung ist nach einer Ausführung dazu eingerichtet, das Schadstoffniveau der abgegebenen Abgase auf Abgasemissionen zu beschränken, welche zumindest für einen, insbesondere alle, Parameter unterhalb, insbesondere deutlich unterhalb, der Umgebungsluft liegen.

Das Kraftfahrzeug ist nach einer Ausführung dazu eingerichtet, basierend auf Fahrzeug- und/oder Umgebungs- und/oder Umweltparametern und/oder basierend auf definierten Vorgaben an die bzw. von der Steuereinrichtung und/oder basierend auf Benutzervorgaben zwischen wenigstens zwei der drei oben genannten Kategorien (a), (b) und (c) zu wechseln.

Mit dieser Strategie wird eine wichtige Möglichkeit geschaffen, die Umweltverträglichkeiten von Kraftfahrzeugen mit Brennkraftmaschinen, z. B. in Ballungsgebieten, Städten und dergleichen, zu verbessern. Wenn das Kraftfahrzeug über Land fährt, wird es in einem ersten Betriebsmodus betrieben, der es erlaubt, auch größere Strecken mit einem sinnvollen Kompromiss an Fahrbarkeit, Verbrauch und Abgasemissionen zurückzulegen. Wird das Kraftfahrzeug dagegen in Schutzgebieten bewegt, wird für eine geringe oder gar nicht auftretende Abgasemission in Kauf genommen, dass die Leistungsabgabe des Kraftfahrzeugs sinkt. Es kann, dies sei angemerkt, dafür im Sinne der vorliegenden Erfindung auch in Kauf genommen werden, dass sich der Verbrauch, und zwar einerseits der spezifische Verbrauch, bezogen auf die jeweilige abgegebene Leistung, aber auch der auf die Fahrstrecke bei gleicher Geschwindigkeit auf die gleiche Fahrstrecke bezogene Verbrauch, erhöht, wenn dies zum Erreichen bestimmter Emissionsziele wünschenswert ist. Dem liegt die Überlegung zugrunde, dass Abgasreinigung energieaufwendig ist und darum für eine gute Abgasreinigung Energie zusätzlich aufgewendet werden muss, die den Verbrauch in diesem Bereich erhöht. Eine Erhöhung des Verbrauchs bei gleicher Geschwindigkeit auf die gleiche Strecke bezogen ist in Kauf zu nehmen, da in derartigen Schutzgebieten, also beispielsweise in den Umweltschutzzonen der Städte, ohnehin eine Geschwindigkeitsbeschränkung gilt, die sich in der Regel verbrauchssenkend auswirkt.

Nach einer bevorzugten Ausführungsform wird die Ansteuerung durch die Steuereinrichtung so bestimmt, dass die Emissionen auch im Falle einer in der Fahrzeugverhaltensprognose prognostizierten Änderung der Betriebsbedingungen durch eine prädiktive Ansteuerung der Stelleinrichtung unter vorgegebenen Grenzwerten gehalten werden.

Nach einer bevorzugten Ausführungsform steuert die Steuereinrichtung wenigstens eine Komponente einer Abgasnachbehandlungseinrichtung derart, dass sie auf eine anstehende Änderung der Betriebsbedingungen vorbereitet ist.

Fährt ein Kraftfahrzeug beispielsweise eine Gefällstrecke hinunter, so wird das Kraftfahrzeug vorrangig rollen oder mit vergleichsweise wenig Drehmoment angetrieben. Folglich werden weniger Abgase erzeugt, was für diesen unmittelbaren Augenblick zwar vorteilhaft ist, allerdings kühlt dadurch auch der Katalysator aus und wenn das Kraftfahrzeug im Anschluss an eine Talfahrt einen Anstieg bewältigen muss, wobei ein erhöhtes Drehmoment benötigt wird und entsprechend viele Abgase entstehen, weist die Abgasnachbehandlungseinrichtung nicht mehr die benötigte Temperatur auf, um die Abgase optimal zu reduzieren bzw. zu oxidieren. Wenn die Steuereinrichtung aber bereits berücksichtigt, dass im Folgenden mit einer erhöhten Abgasmenge zu rechnen ist, kann der Motor bereits während der Talfahrt dazu veranlasst werden, z.B. mit veränderten Zündzeitpunkten oder mit einer erhöhten Drehzahl die Abgasnachbehandlungseinrichtung auf die kommende Aufgabe der Schadstoffkonvertierung vorzubereiten, indem diese bereits vorab auf Temperatur gebracht wird, d.h. die erforderliche Enthalpie bereitgestellt wird.

Nach einer bevorzugten Ausführungsform kann durch wenigstens einen emissionsbezogenen Parameter eine Aussage über das Verhalten einer Komponente einer Abgasnachbehandlungseinrichtung getroffen werden.

Bei entsprechender Ausgestaltung ist dies deshalb vorteilhaft, da somit die Prognosezuverlässigkeit weiter erhöht werden kann, wenn nicht nur auf Erfahrungswerte hinsichtlich des Zustands der Komponente der Abgasnachbehandlungseinrichtung, z.B. des Katalysators, herangezogen werden, sondern auf reale Messwerte und/oder auf modellierte Werte und/oder auf prognostizierte Werte zurückgegriffen werden kann. Nach einer bevorzugten Ausführungsform stellt die Emissionsprognose eine Aussage darüber bereit,
(i) ob und/oder wie sich als ein Ergebnis der Fahrzeugverhaltensprognose der Schadstoffausstoß der Brennkraftmaschine in einem Prognosezeitraum ändern wird; und/oder
(ii) ob und/oder wie sich das Verhalten wenigstens einer Komponente einer Abgasnachbehandlungseinrichtung ändern wird; und/oder
(iii) wie sich die wenigstens eine Komponente der Abgasnachbehandlungseinrichtung im Hinblick auf eine mögliche Änderung des Schadstoffausstoßes der Brennkraftmaschine verhalten wird.

Bei entsprechender Ausgestaltung ist dies deshalb vorteilhaft, da Schadstoffemissionen unter Berücksichtigung von Fahrbarkeit und Verbrauch in eine prädiktive Betrachtung des zu erwartenden Fahrzeugverhaltens eingeht. Hieraus können verschiedene Maßnahmen abgeleitet werden, um den Schadstoffausstoß zu reduzieren.

Nach einer bevorzugten Ausführungsform verändert die Stelleinrichtung eine der veränderbaren Stellgrößen der Brennkraftmaschine, um einen über den Prognosehorizont hinausgehend optimierten Schadstoffausstoß zu gewährleisten.

Wie oben bereits erläutert liegt der Prognosehorizont der Kurzzeitprognose im Bereich von 10 ms bis 10 s, insbesondere im Bereich von 100 ms bis 7 s, bevorzugt im Bereich vom 500 ms bis 5 s. Nach der zuletzt beschriebenen Ausführungsform wird die Optimierung des Schadstoffausstoßes angestrebt, welcher über den Prognosehorizont hinausgeht. Es ist dem Fachmann einsichtig, dass eine Entscheidung zur Veränderung der Motoransteuerung nur aufgrund der im Prognosehorizont auftretenden Ereignisse veranlasst werden kann. Jedoch sind die vorgegebenen Kriterien, nach denen die Schadstoffprognose ausgewertet wird, bevorzugt veränderbar. Bei der, insbesondere regelmäßig iterierenden, insbesondere quasi-kontinuierlichen, wiederholenden Validierung der Kriterien wird für die Betrachtung ein längerer Zeitraum gewählt, als der Prognosehorizont. Entsprechende Zeiträume liegen beispielsweise in einem Bereich von einer Minute bis 10 Minuten.

Nach einer bevorzugten Ausführungsform bildet die Steuereinrichtung die Emissionsprognose zu einem Zeitpunkt t₀ und eine Veränderung des Fahrzeugverhaltens und/oder des Verhaltens wenigstens einer Komponente einer Abgasnachbehandlungseinrichtung zum Zeitpunkt t₁ wird prognostiziert, wobei die Initiierung der Ansteuerung zum Zeitpunkt t_{A} erfolgt, wobei t₀ ≤ t_{A} < t₁ ist.

Nach einer bevorzugten Ausführungsform wird t_{A} durch die Steuereinrichtung so bestimmt, dass einerseits die Fahrbarkeit und andererseits die Drehmoment- und/oder Leistungsaufnahme und/oder -abgabe und/oder die Schadstoffabgabe der wenigstens einen Komponente und/oder wenigstens einer weiteren Komponente des Kraftfahrzeugs und/oder des Gesamtfahrzeugs optimiert wird.

Somit kann der Zeitpunkt der Initiierung der Ansteuerung flexibel an das Betriebsverhalten der Komponente angepasst werden. Im Gegensatz zum bekannten Stand der Technik wird die Ansteuerung nicht sofort initiiert, sondern der Zeitpunkt wird so gewählt, dass die Schadstoffemission unter Berücksichtigung von Fahrbarkeit und Verbrauch möglichst optimal ausfällt. Zum Beispiel muss ein Abgasturbolader nicht sofort hochgefahren werden, wenn ein Leistungsabruf in z.B. vier Sekunden erwartet wird, sondern dieser Zeitpunkt wird so gewählt, dass die als benötigt prognostizierte Leistung auch erst zu dem prognostizierten Zeitpunkt bereitgestellt wird. Ein solches System ist bevorzugt in der Lage, Energie zu sparen und den Schadstoffausstoß zu senken. Mögliche Optimierungskriterien sind des Weiteren auch die Verlängerung der Lebensdauer wenigstens einer Komponente, bevorzugt mehrerer Komponenten, noch bevorzugter des Gesamtfahrzeugs.

Der zeitliche Verlauf ist in einer Darstellung, in welcher auf der x-Achse die Zeit und auf der y-Achse die Ziel- und/oder Ist-Größe dargestellt ist, bevorzugt eine ansteigende oder abfallende Rampe, eine optimierte Kurvenform, welche gegebenenfalls regelungstechnisch erzeugte Über- oder Unterschwinger aufweist, eine angenäherte stufenförmige Funktion oder eine andere beliebige Übergangsfunktion.

Nach einer bevorzugten Ausführungsform ist der zeitliche Verlauf des Sollwertes der Stellgröße wenigstens im Wesentlichen stetig, bevorzugt stetig.

Bei entsprechender Ausgestaltung ist dies deshalb vorteilhaft, da somit bevorzugt das Bordnetz und/oder mechanische Verbindungen der betreffenden Komponente nicht sprungartigen Lastveränderungen unterworfen sind und deshalb das elektrische Bordnetz und/oder die mechanischen Verbindungen der betreffenden Komponente auch entsprechend so ausgelegt werden können, dass sie derartige Lastveränderungen nicht zwingend auffangen müssen.

Nach einer bevorzugten Ausführungsform wird t_{A} durch die Steuereinrichtung so bestimmt, so dass die Schadstoffemission unter Berücksichtigung von Fahrbarkeit und Verbrauch reduziert wird.

Nach einer bevorzugten Ausführungsform wird die erste Sensoreinrichtung ausgewählt aus der Gruppe, bestehend aus: Sensorvorrichtungen des Antriebsstrangs, Fahrerassistenzsysteme, insbesondere Radar, Lidar, Ultraschall und/oder Kamerasysteme, insbesondere Kamerasysteme mit nachgeschalteter Schiledererkennung, Navigationseinrichtungen, Wettersensoreinrichtungen, Fahrmodusschalter und/oder Fahrerschnittstellen, insbesondere Pedalerie, Gangwahl und Getriebestellung, Blinker und/oder Scheibenwischer.

Bei entsprechender Ausgestaltung ist dies vorteilhaft, da somit das Zustandsmodell bevorzugt aus Zustandsparametern ermittelt wird, welche ohnehin bereits im Kraftfahrzeug zu unterschiedlichen Zwecken erfasst und verarbeitet werden.

Nach einer bevorzugten Ausführungsform ist die Steuereinrichtung dafür vorgesehen, die spezifischen Fahranforderungen eines individuellen Fahrers zu erfassen, daraus wenigstens ein Fahrerprofil zu erstellen und die somit gewonnen Erkenntnisse in die Prognose mit aufzunehmen.

Bei entsprechender Ausgestaltung ist dies deshalb vorteilhaft, da somit die Gepflogenheiten des Fahrers, welche für die Prognose des Fahrzeugverhaltens neben dem Zustandsmodell eine wichtige Rolle spielt, mit erfasst und berücksichtigt werden können. Beispielsweise bei der Prognose, ob ein individueller Fahrer in einer speziellen Situation auf der Landstraße ein vor ihm fahrendes langsameres Fahrzeug überholen wird oder nicht.

Nach einer bevorzugten Ausführungsform ist die Steuereinrichtung dafür vorgesehen, die Prognosezuverlässigkeit des Fahrerprofils, bevorzugt kontinuierlich, in Form einer Selbstoptimierung zu verbessern.

Nach einer weiteren bevorzugten Ausführungsform ist die Steuereinrichtung dafür vorgesehen, eine Mehrzahl von Fahrerprofilen zu erstellen und zu verwalten.

Nach einer bevorzugten Ausführungsform weist das Kraftfahrzeug eine Anzeigeeinrichtung auf, welche dafür vorgesehen ist, einem Dritten wenigstens einen Betriebsmodus des Kraftfahrzeugs, insbesondere optisch und/oder akustisch und/oder mittels drahtloser Datenübertragung, insbesondere Funk, anzuzeigen.

Ein "Betriebsmodus" im Sinne der vorliegenden Erfindung ist insbesondere ein Zustand, welcher vom Fahrer und/oder der Steuereinrichtung gesetzt wird und welcher das Steuerverhalten der Steuereinrichtung in Bezug auf die Abgasemissionen beschreibt. Mögliche Betriebsmodi sind beispielsweise ein "Normalbetrieb" oder ein Betrieb mit gegenüber dem Normalbetrieb herabgesetzter Emission (im Folgenden auch Niedrig-Emissions-Betriebsmodus genannt), wobei letzterer insbesondere zwei oder mehr Stufen aufweist.

"Dritte" im Sinne der vorliegenden Erfindung sind insbesondere weitere Verkehrsteilnehmer und/oder Organe staatlicher Behörden, wie zum Beispiel der Polizei.

Dies ist nach einer Ausführung insbesondere vorteilhaft, weil es somit ermöglicht wird, beispielsweise ein verpflichtendes Aktivieren des Niedrig-Emissions-Betriebsmodus, beispielsweise in Umweltzonen von Städten zu überwachen. Dies erfolgt vorzugsweise optisch, mittels einer an der Außenhülle des Kraftfahrzeugs angebrachten und/oder mittels einer in der Außenhülle des Kraftfahrzeugs integrierten Leuchteinrichtung. Nach einer weiteren bevorzugten Ausführung erfolgt die Anzeige des Betriebsmodus mittels eines Funkwellensenders, welcher ein Funksignal aussendet, welches eine Betriebsmodus-Information und eine Identifikationsinformation aufweist, und einer Empfangseinrichtung des Dritten, an welche das Funksignal direkt oder indirekt übertragen wird.

Nach einer bevorzugten Ausführungsform sind das Antriebssystem und/oder die erste Sensoreinrichtung und/oder die Stelleinrichtung und/oder die Steuereinrichtung als nachrüstbare und/oder nachträglich konfigurierbare Komponenten ausgebildet. Nach einer bevorzugten Weiterbildung sind alle Komponenten des Kraftfahrzeugs bereits vorhanden und lediglich die Steuereinrichtung muss neu konfiguriert werden.

Hierdurch ist es nach einer Ausführungsform insbesondere möglich, ein ab Werk nicht erfindungsgemäßes Kraftfahrzeug nachträglich zu einem erfindungsgemäßen Kraftfahrzeug umzurüsten.

Das Verfahren der vorliegenden Erfindung ist insbesondere vorteilhaft, weil der zur Verfügung stehende Prognosehorizont dazu genutzt werden kann, die gewünschte Fahrbarkeit möglichst schadstoffeffizient bereitzustellen.

Nach einer bevorzugten Ausführungsform können die Schritte des Verfahrens von Einrichtungen in einem Kraftfahrzeug nach einer der oben beschriebenen Ausführungsformen ausgeführt werden.

Bezüglich der Vorteile wird auf die obigen Erläuterungen zu den verschiedenen Ausführungsformen des Kraftfahrzeugs verwiesen, welche hier im selben Umfang Gültigkeit besitzen.

Weitere vorteilhafte Weiterbildungen der vorliegenden Erfindung ergeben sich aus den Unteransprüchen und der nachfolgenden Beschreibung bevorzugter Ausführungsformen. Hierzu zeigt:
- Fig. 1: eine schematische Ansicht eines Brennkraftmaschine mit angeschlossener Abgasnachbehandlungseinrichtung und einer Steuereinheit;
- Fig. 2: eine schematische Funktionsdarstellung des Kraftfahrzeugs; und
- Fig. 3: ein Flussdiagramm eines erfindungsgemäßen Verfahrens zur prädiktiven Ansteuerung eines Kraftfahrzeugs.

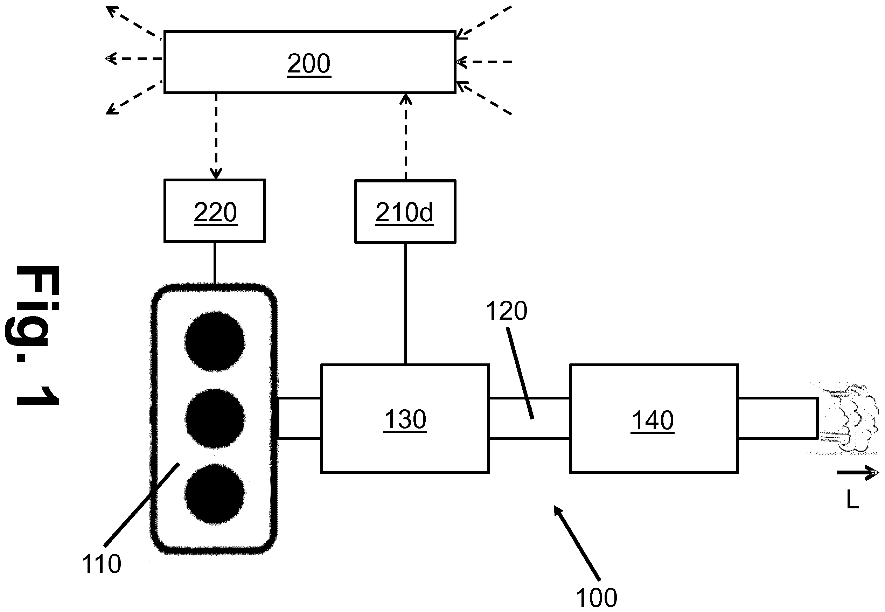

Fig. 1 zeigt eine exemplarische schematische Ansicht einer Brennkraftmaschine 110 mit angeschlossener Abgasnachbehandlungseinrichtung 100 und einer Steuereinheit 200. In Richtung der Abgasströmrichtung L, in Fig. 1 durch einen Pfeil dargestellt, ist eingangsseitig die Brennkraftmaschine 110 angeordnet. Diese ist über ein Abgasrohr 120 mit dem Katalysator 130 und darauffolgend mit dem Partikelfilter 140 gasführend verbunden. Eine Sensoreinrichtung zur Erfassung von Emissionsparametern 210d, wie z.B. der Temperatur des Katalysators 130, ist mit dem Katalysator 130 verbunden. Der erfasste Messwert wird an die Steuereinrichtung 200, bevorzugt über ein BUS-System, übertragen. Wie durch die seitlich an der Steuereinrichtung 200gezeichneten gestrichelten Pfeile angedeutet, empfängt die Steuereinrichtung 200 auch noch weitere Daten, z.B. von Sensoreinrichtungen zur Erfassung von Fahrzeugparametern 210a, Sensoreinrichtungen zur Erfassung von Umgebungsparametern 210b und Sensoreinrichtungen zur Erfassung von Umweltparametern 210c. Die Steuereinrichtung 200 verarbeitet den eingegangenen Messwert bzw. die eingegangenen Messwerte und gibt ein einen Steuerwert und/oder einen Steuersatz zur Ansteuerung der Brennkraftmaschine 110 und/oder einer Komponente der Abgasnachbehandlungseinrichtung an die entsprechende Stelleinrichtung (für die Brennkraftmaschine mit 220 bezeichnet, für die Abgasnachbehandlungseinrichtung nicht dargestellt) ab. Die Stelleinrichtung 220 der Brennkraftmaschine 110 modifiziert den Betriebspunkt der Brennkraftmaschine 110 entsprechend des Steuerwertes und/oder des Steuersatzes. Eine Stelleinrichtung der Abgasnachbehandlungseinrichtung ist beispielsweise eine Vorrichtung zur Eindosierung von Medien zur Abgasnachbehandlung, insbesondere von Dieselkraftstoff und/oder wässriger Harnstofflösung.

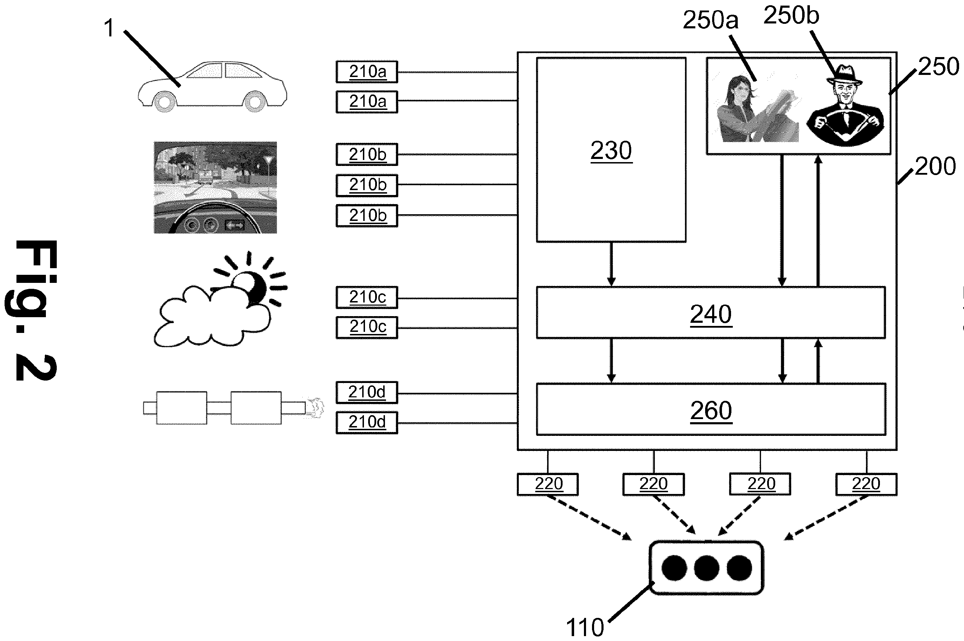

Fig. 2 zeigt eine schematische Funktionsdarstellung eines Kraftfahrzeugs 1. Über Sensoreinrichtungen 210 werden Messwerte und/oder andere Daten erfasst. Unter der Referenznummer 210 werden Sensoreinrichtungen 210a zur Erfassung von Fahrzeugparametern, Sensoreinrichtungen 210b zur Erfassung von Umgebungsparametern, Sensoreinrichtungen 210c zur Erfassung von Umweltparametern und Sensoreinrichtungen 210d zur Erfassung von Emissionsparametern zusammengefasst und gemeinsam beschrieben.

Fahrzeugparameter sind insbesondere Parameter des Antriebsstrangs, z.B. die Geschwindigkeit des Kraftfahrzeugs 1, aber ebenso das Gewicht des Kraftfahrzeugs 1, möglicherweise sogar die Verteilung des Gewichts auf die einzelnen Räder, der Luftdruck in den Reifen, die Lenkradstellung, der gewählte Gang, die Stellung des Gas- und Bremspedals etc. Entsprechende Sensoreinrichtungen 210a sind beispielsweise Drucksensoren, Winkelsensoren, Wegsensoren etc.

Umgebungsparameter betreffen insbesondere die aktuelle Fahrsituation, z.B. die Position, Geschwindigkeit und Richtung vor, nach und/oder neben dem Kraftfahrzeug 1 befindlicher Fahrzeuge sowie Informationen über den vor dem Kraftfahrzeug 1 liegenden Streckenabschnitt, z.B. Straßenführung, Vorfahrtsregelung, aktuelle und/oder prognostizierte Ampelphase, Steigung der Fahrbahn, Untergrund etc. Entsprechende Sensoreinrichtungen 210b bzw. entsprechende Informationsquellen sind z.B. ein Navigationssystem des Kraftfahrzeugs 1, Sensoreinrichtungen von Fahrerassistenzsystemen, insbesondere Kameras, Radar, Lidar, Car-to-X-Schnittstellen etc.

Umweltparameter betreffen insbesondere das aktuelle Wetter, in welchem sich das Kraftfahrzeug 1 bewegt. Entsprechende Parameter sind bevorzugt die Temperatur, der Luftdruck der Umgebungsluft, insbesondere zur Vorhersage von Wetterveränderungen, Vorliegen von Regen- und/oder Schneefall, Regenniederschlags- und/oder Schneefallmenge, auf dem Untergrund befindliche Schneemenge, Glättegrad etc. Entsprechende Sensoreinrichtungen 210c sind z.B. Temperatursensoren, Luftdrucksensoren, Regensensoren etc.

Emissionsparameter betreffen insbesondere die Abgasmenge, die Mengen einzelner chemischer Verbindungen, die Temperatur des Katalysators, das Verbrennungsluftverhältnis etc..

Die Messwerte und/oder Daten der Sensoreinrichtungen 210 werden, bevorzugt über ein fahrzeuginternes BUS-System, an eine Steuereinrichtung 200 übertragen. Die Steuereinrichtung 200 ist weiterhin, bevorzugt über ein BUS-System, mit Stelleinrichtungen 220 verbunden, welche dafür vorgesehen sind, wenigstens eine der veränderbaren Stellgrößen der Brennkraftmaschine zu verändern

Die Steuereinrichtung 200 weist eine Zustandsmodellermittlungseinrichtung 230, eine Fahrzeugverhaltensprognoseberechnungseinrichtung 240 und eine Fahrerprofilverwaltungseinrichtung 250 auf. Des Weiteren kann die Steuereinrichtung dafür vorgesehen sein, insbesondere auf Grundlage wenigstens eines Zustandsparameters, welcher von wenigstens einer der Sensoreinrichtungen 210 erfasst und bereitgestellt wird, zu erwartende Emissionen mittels wenigstens eines Emissionsberechnungsmodells zu berechnen.

Die Zustandsmodellermittlungseinrichtung 230 ist dafür vorgesehen, aus den Messwerten und/oder Daten der Sensoreinrichtungen 210 ein Zustandsmodell zu ermitteln. Dieses Zustandsmodell ist eine multikriterielle Abbildung des aktuellen Ist-Zustands des Kraftfahrzeugs 1 (z.B. Geschwindigkeit, Lenkradstellung, Gang, Gesamtgewicht) in seiner aktuellen Umgebung (z.B. Straßenbelag, Wetter, Hindernisse, Straßenverlauf) und in seiner aktuellen Fahrsituation (z.B. Beschleunigen, bei im Wesentlichen gleichbleibender Geschwindigkeit Fahren, Abbremsen, Überholen, Abbiegen).

Die Fahrerprofilverwaltungseinrichtung 250 verwaltet in der in Fig. 2 dargestellten Ausführungsform exemplarisch zwei Fahrerprofile 250a, 250b, welche jeweils unterschiedlichen Fahrern zugeordnet sind. Es versteht sich von selbst, dass die Fahrerprofilverwaltungseinrichtung 250 auch weniger oder mehr Fahrerprofile verwalten kann. Hierbei können die Fahrerprofile dergestalt angelegt werden, dass jedem Fahrer des Kraftfahrzeugs 1 ein personenspezifisches Profil zugeordnet ist. Des Weiteren ist es aber zusätzlich oder alternativ auch möglich, dass für einen Fahrer mehrere Profile angelegt werden, z.B. "eco", "comfort", "sportlich", "hochsportlich" oder dergleichen, welche dann von dem Fahrer entsprechend seiner aktuellen Lebenssituation ausgewählt werden können.

Unter Berücksichtigung eines vom Fahrer oder automatisch ausgewählten Fahrerprofils 250a, 250b wird in der Fahrzeugverhaltensprognoseberechnungseinrichtung 240 eine Prognose des Fahrzeugverhaltens während des zeitlich in der Zukunft liegenden Prognosehorizonts berechnet. Bevorzugt werden die Aufgaben von der Zustandsermittlungseinrichtung 230 von der Fahrzeugverhaltensprognoseberechnungseinrichtung 240 mit übernommen, sodass Fahrzeugverhaltensprognoseberechnungseinrichtung 240 die Fahrzeugverhaltensprognose direkt aus den Daten der Sensoreinrichtungen 210 und, und insbesondere zusätzlich der Fahrerprofilverwaltungseinrichtung 250, berechnet.

Aus der Fahrzeugverhaltensprognose erstellt eine Emissionsprognoseerstellungseinrichtung 260 eine Emissionsprognose, insbesondere unter Berücksichtigung der Messwerte der Sensoreinrichtungen zur Erfassung von Emissionsparametern 210d.

Aus dieser Emissionsprognose wird ein Steuerwert oder Steuersatz zur Ansteuerung der Stelleinrichtung 220 abgeleitet und an die jeweilige Stelleinrichtung 220, bevorzugt über ein BUS-System, übertragen.

Aufgrund zeitlich nachfolgend eingehender Daten und/oder Messwerten wird der Grad des Eintretens der Prognose evaluiert. Werden hierbei Abweichungen festgestellt, welche dem aktuellen Fahrer zuzuordnen sind, so wird das jeweilige Fahrerprofil 250a, 250b entsprechend aktualisiert, um die Prognosezuverlässigkeit kontinuierlich zu verbessern. Diese Aktualisierung erfolgt durch die Fahrzeugverhaltensprognoseberechnungseinrichtung 240 und/oder die Fahrerprofilverwaltungseinrichtung 250.

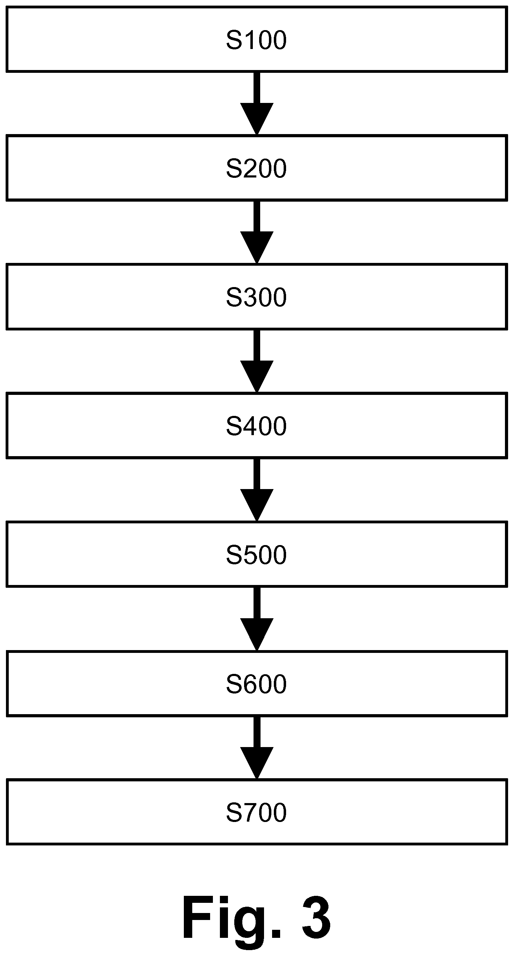

In Fig. 3 ist ein Flussdiagramm eines erfindungsgemäßen Verfahrens zur prädiktiven Ansteuerung eines Kraftfahrzeugs 1 mit wenigstens einem ersten Antriebsmotor, der als Brennkraftmaschine 110 ausgebildet ist und eine Vielzahl veränderbarer Stellgrößen aufweist.

In Schritt S100 wird wenigstens ein fahrzeug- und/oder umgebungs- und/oder umweltbezogener Zustandsparameter erfasst und bereitgestellt. Dies erfolgt nach einer Ausführungsform durch die Sensoreinrichtungen 210a, 210b, 210c.

In Schritt S200 wird der bereitgestellte fahrzeug- und/oder umgebungs- und/oder umweltbezogene Zustandsparameter empfangen und verarbeitet. Dies erfolgt nach einer bevorzugten Ausführungsform durch die Steuereinheit 200.

In Schritt S300 wird ein Zustandsmodell unter Berücksichtigung dieses Zustandsparameters ermittelt. Dies erfolgt nach einer bevorzugten Ausführungsform durch die Zustandsmodellermittlungseinrichtung 230 der Steuereinheit 200.

In Schritt S400 wird eine Prognose des Fahrzeugverhaltens unter Heranziehung dieses Zustandsmodells berechnet. Dies erfolgt nach einer bevorzugten Ausführungsform durch die Fahrzeugverhaltensprognoseberechnungseinrichtung 240 der Steuereinheit 200.

Bevorzugt können die Schritte S300 und S400 durch einen Schritt S400a (nicht gezeigt) ersetzt werden, in dem eine Prognose des Fahrzeugverhaltens (direkt) unter Berücksichtigung dieses Zustandsparameters berechnet wird.

In Schritt S500 wird unter Heranziehung der Fahrzeugverhaltensprognose eine Emissionsprognose berechnet. Dies erfolgt nach einer bevorzugten Ausführungsform durch die Emissionsprognoseerstellungseinrichtung 260 der Steuereinheit 200.

In Schritt S600 wird die Emissionsprognose anhand von vorgegebenen Kriterien ausgewertet. Dies erfolgt nach einer bevorzugten Ausführungsform durch eine Auswertungseinheit der Steuereinheit 200.

In Schritt S700 wird ein Steuerwert oder Steuersatz zur Ansteuerung der Stelleinrichtung 220 aufbauend auf der Emissionsprognose abgeleitet.

Es versteht sich für den Fachmann, dass die oben genannten Schritte S100 bis S700 zumindest teilweise sequentiell und/oder zumindest teilweise auch parallel, d.h. mit gleichen Start- und Endzeitpunkten, und/oder zumindest teilweise nebeneinander, d.h. mit unterschiedlichen Start- und/oder Endzeitpunkten, jedoch zumindest mit einer zeitlichen Überlappung, ausgeführt werden können.

Die genannten Vorteile und Ausführungsformen der Erfindung wurden vorstehend ausschließlich in Bezug auf Brennkraftmaschinen beschrieben. Es sei aber angemerkt, dass sich diese Vorteile auch erreichen lassen, wenn das Kraftfahrzeug mit einem Hybridantrieb ausgestattet ist, d.h. teilweise mit einer Brennkraftmaschine angetrieben wird, und mit wenigstens einem nach einem anderen Konzept arbeitenden Motor, insbesondere einem Elektromotor, angetrieben wird.

**Bezugszeichenliste**

| | |
|---|---|
| 1 | Kraftfahrzeug |
| 100 | Brennkraftmaschine mit Abgasnachbehandlungseinrichtung |
| 110 | Brennkraftmaschine |
| 120 | Abgasrohr |
| 130 | Katalysator |
| 140 | Partikelfilter |
| 200 | Steuereinrichtung |
| 210 | Sensoreinrichtung (allgemein) |
| 210a | Sensoreinrichtung zur Erfassung von Fahrzeugparametern |
| 210b | Sensoreinrichtung zur Erfassung von Umgebungsparametern |
| 210c | Sensoreinrichtung zur Erfassung von Umweltparametern |
| 210d | Sensoreinrichtung zur Erfassung von Emissionsparametern |
| 220 | Stelleinrichtung |
| 230 | Zustandsmodellermittungseinrichtung |
| 240 | Fahrzeugverhaltensprognoseberechnungseinrichtung |
| 250 | Fahrerprofilverwaltungseinrichtung |
| 250a | Fahrerprofil 1 |
| 250b | Fahrerprofil 2 |
| 260 | Emissionsprognoseerstellungseinrichtung |
| | |
| S100 | Erfassen und Bereitstellen eines Zustandsparameters |
| S200 | Empfangen und Verarbeiten des Zustandsparameters |
| S300 | Ermitteln eines Zustandsmodells |
| S400 | Berechnen einer Fahrzeugverhaltensprognose |
| S500 | Berechnen einer Emissionsprognose |
| S600 | Auswerten der Emissionsprognose |
| S700 | Ableiten eines Steuerwertes oder Steuersatzes |
| | |
| L | Abgasströmrichtung |

## Patentansprüche

1. Kraftfahrzeug **(1)** mit:
einem Antriebssystem, welches wenigstens einen ersten Antriebsmotor aufweist, der als Brennkraftmaschine **(110)** ausgebildet ist, wobei die Brennkraftmaschine **(110)** eine Vielzahl veränderbarer Stellgrößen aufweist;
wenigstens einer ersten Sensoreinrichtung **(210a, 210b, 210c),** welche dafür vorgesehen ist, wenigstens einen fahrzeug- und/oder umgebungs- und/oder umweltbezogenen Zustandsparameter zu erfassen und einen diesen repräsentierenden Datenwert bereitzustellen;
wenigstens einer Stelleinrichtung **(220),** welche dafür vorgesehen ist, wenigstens eine der veränderbaren Stellgrößen der Brennkraftmaschine **(110)** zu verändern;
wenigstes einer Steuereinrichtung **(200),** welche dazu eingerichtet ist, die Datenwerte der ersten Sensoreinrichtung **(210a, 210b, 210c)** zu verarbeiten und ein Signal an die Stelleinrichtung **(220)** zu übermitteln,
wobei die Steuereinrichtung **(200)** dafür vorgesehen ist,
(a) den wenigstens einen bereitgestellten fahrzeug- und/oder umgebungs- und/oder umweltbezogenen Zustandsparameter zu empfangen und zu verarbeiten;
(b) eine Fahrzeugverhaltensprognose unter Berücksichtigung dieser Zustandsparameter zu berechnen;
(c) unter Heranziehung dieser Fahrzeugverhaltensprognose eine Emissionsprognose zu erstellen;
(d) die Emissionsprognose anhand von vorgegebenen Kriterien auszuwerten; und
(e) aufbauend auf der Emissionsprognose einen Steuerwert oder Steuersatz zur Ansteuerung der Stelleinrichtung **(220)** abzuleiten,
wobei die Fahrzeugverhaltensprognose eine Kurzzeitprognose und eine Langzeitprognose aufweist,
wobei ein Prognosehorizont der Kurzzeitprognose im Bereich von 10 ms bis 10 s liegt; und
wobei die Langzeitprognose einen Prognosehorizont von 1 min bis 20 min oder mehr erfasst.

2. Kraftfahrzeug nach Anspruch 1, wobei die vorgegebenen Kriterien in Abhängigkeit von wenigstens einem der fahrzeug- und/oder umgebungs- und/oder umweltbezogenen Zustandsparameter veränderbar sind.

3. Kraftfahrzeug nach einem der Ansprüche 1 oder 2, wobei die Ansteuerung durch die Steuereinrichtung **(200)** so bestimmt wird, dass die Emissionen auch im Falle einer in der Fahrzeugverhaltensprognose prognostizierten Änderung der Betriebsbedingungen durch eine prädiktive Ansteuerung der Stelleinrichtung **(220)** unter vorgegebenen Grenzwerten gehalten werden.

4. Kraftfahrzeug nach einem der vorhergehenden Ansprüche, wobei die Steuereinrichtung **(200)** wenigstens eine Komponente **(130, 140)** einer Abgasnachbehandlungseinrichtung so ansteuert, dass sie auf eine anstehende Änderung der Betriebsbedingungen vorbereitet ist.

5. Kraftfahrzeug nach einem der vorhergehenden Ansprüche, wobei die Steuereinrichtung **(200)** diese wenigstens eine Stelleinrichtung **(220)** so ansteuert, dass der Treibstoffverbrauch zumindest kurzzeitig gegenüber dem für einen jeweiligen Betriebspunkt möglichen Mindestwert erhöht ist, um dadurch den Schadstoffausstoß des Kraftfahrzeugs **(1)** mittelfristig zu minimieren.

6. Kraftfahrzeug nach einem der vorhergehenden Ansprüche, wobei durch wenigstens einen emissionsbezogenen Parameter eine Aussage über das Verhalten einer Komponente **(130, 140)** einer Abgasnachbehandlungseinrichtung getroffen werden kann.

7. Kraftfahrzeug nach einem der vorhergehenden Ansprüche, wobei die Emissionsprognose eine Aussage darüber bereitstellt,
(i) ob und/oder wie sich als ein Ergebnis der Fahrzeugverhaltensprognose der Schadstoffausstoß der Brennkraftmaschine **(110)** in einem Prognosezeitraum ändern wird; und/oder
(ii) ob und/oder wie sich das Verhalten wenigstens einer Komponente **(130, 140)** einer Abgasnachbehandlungseinrichtung ändern wird; und/oder
(iii) wie sich die wenigstens eine Komponente **(130, 140)** der Abgasnachbehandlungseinrichtung im Hinblick auf eine mögliche Änderung des Schadstoffausstoßes der Brennkraftmaschine **(110)** verhalten wird.

8. Kraftfahrzeug nach einem der vorhergehenden Ansprüche, wobei die Steuereinrichtung **(200)** die Emissionsprognose zu einem Zeitpunkt t₀ bildet und eine Veränderung des Fahrzeugverhaltens und/oder des Verhaltens wenigstens einer Komponente **(130, 140)** einer Abgasnachbehandlungseinrichtung zum Zeitpunkt t₁ prognostiziert wird, wobei die Initiierung der Ansteuerung zum Zeitpunkt t_{A} erfolgt, wobei t₀ ≤ t_{A} < t₁ ist.

9. Kraftfahrzeug nach Anspruch 8, wobei t_{A} durch die Steuereinrichtung **(200)** so bestimmt wird, dass einerseits die Fahrbarkeit und andererseits das Verhalten einer Komponente **(130, 140)** einer Abgasnachbehandlungseinrichtung optimiert wird.

10. Kraftfahrzeug nach einem der vorhergehenden Ansprüche, wobei die erste Sensoreinrichtung **(210a, 210b, 210c)** ausgewählt ist aus der Gruppe, bestehend aus: Sensorvorrichtungen des Antriebsstrangs, Fahrerassistenzsysteme, insbesondere Radar, Lidar, Ultraschall und/oder Kamerasysteme, Navigationseinrichtungen, Wettersensoreinrichtungen, Fahrmodusschalter und/oder Fahrerschnittstellen, insbesondere Pedalerie, Gangwahl, Blinker und/oder Scheibenwischer.

11. Kraftfahrzeug nach einem der vorhergehenden Ansprüche, weiterhin aufweisend eine Anzeigeeinrichtung, welche dafür vorgesehen ist, einem Dritten wenigstens einen Betriebsmodus des Kraftfahrzeugs, insbesondere optisch und/oder akustisch und/oder mittels drahtloser Datenübertragung, insbesondere Funk, anzuzeigen.

12. Kraftfahrzeug nach einem der vorhergehenden Ansprüche, wobei das Antriebssystem und/oder die erste Sensoreinrichtung **(210a, 210b, 210c)** und/oder die Stelleinrichtung **(220)** und/oder die Steuereinrichtung **(200)** als nachrüstbare und/oder nachträglich konfigurierbare Komponenten ausgebildet sind.

13. Verfahren zur prädiktiven Ansteuerung eines Kraftfahrzeugs **(1)** mit wenigstens einem ersten Antriebsmotor, der als Brennkraftmaschine **(110)** ausgebildet ist und eine Vielzahl veränderbarer Stellgrößen aufweist, und mit wenigstens einer Stelleinrichtung (220), welche dafür vorgesehen ist, wenigstens eine der veränderbaren Stellgrößen der Brennkraftmaschine (110) zu verändern,
mit den Schritten:
(a) Erfassen und Bereitstellen wenigstens eines fahrzeug- und/oder umgebungs- und/oder umweltbezogenen Zustandsparameters;
(b) Empfangen und Verarbeiten des bereitgestellten fahrzeug- und/oder umgebungs- und/oder umweltbezogenen Zustandsparameters;
(c) Berechnen einer Fahrzeugverhaltensprognose unter Berücksichtigung dieses Zustandsparameters;
(d) Berechnen einer Emissionsprognose unter Heranziehung der Fahrzeugverhaltensprognose;
(e) Auswerten der Emissionsprognose anhand von vorgegebenen Kriterien; und
(f) Ableiten eines Steuerwerts oder Steuersatzes zur Ansteuerung der Stelleinrichtung aufbauend auf der Emissionsprognose
wobei die Fahrzeugverhaltensprognose eine Kurzzeitprognose und eine Langzeitprognose aufweist,
wobei ein Prognosehorizont der Kurzzeitprognose im Bereich von 10 ms bis 10 s liegt; und
wobei die Langzeitprognose einen Prognosehorizont von 1 min bis 20 min oder mehr erfasst.

14. Verfahren nach Anspruch 13, wobei die Emissionsprognose zu einem Zeitpunkt t₀ berechnet wird und eine Veränderung des Fahrzeugverhaltens und/oder des Verhaltens wenigstens einer Komponente **(130, 140)** einer Abgasnachbehandlungseinrichtung zum Zeitpunkt t₁ prognostiziert wird, wobei die Initiierung der Ansteuerung zum Zeitpunkt t_{A} erfolgt, wobei t₀ ≤ t_{A} < t₁ ist.

15. Verfahren nach einem der Ansprüche 13 oder 14, wobei die Steuereinrichtung **(200)** diese wenigstens eine Stelleinrichtung **(220) so ansteuern** kann, dass der Treibstoffverbrauch zumindest kurzzeitig gegenüber dem für einen jeweiligen Betriebspunkt möglichen Mindestwert erhöht ist, um dadurch den Schadstoffausstoß des Kraftfahrzeugs **(1)** mittelfristig zu minimieren,
und/oder
wobei die Schritte des Verfahrens von Einrichtungen in einem Kraftfahrzeug **(1)** nach einem der Ansprüche 1 bis 12 ausgeführt werden

## Claims

1. A motor vehicle (1) comprising:
a drive system having at least one first drive motor designed as an internal combustion engine (110), wherein the internal combustion engine (110) has a plurality of modifiable control variables;
at least one first sensor device (210a, 210b, 210c) which is provided for detecting a vehicle-related and/or surroundings-related and/or environment-related status parameter and providing a data value representing same;
at least one setting device (220) which is provided for changing at least one of the modifiable control variables of the internal combustion engine (110);
at least one control device (200) designed to process the data values of the first sensor device (210a, 210b, 210c) and transmit a signal to the setting device (220),
wherein the control device (200) is provided for
(a) receiving and processing the at least one provided vehicle-related and/or surroundings-related and/or environment-related status parameter;
(b) calculating a vehicle behavior prediction in consideration of said status parameter;
(c) generating an emission prediction based on said vehicle behavior prediction;
(d) evaluating the emission prediction on the basis of predefined criteria; and
(e) deriving a control value or control set for controlling the setting device (220) on the basis of the emission prediction,
wherein the vehicle behavior prediction comprises a short-term prediction and a long-term prediction;
wherein a forecast horizon for the short-term prediction is in the range of from 10 ms to 10 s; and
wherein the long-term prediction covers a forecast horizon of from 1 min to 20 min or longer.

2. The motor vehicle according to claim 1, wherein the predefined criteria can be changed as a function of at least one of the vehicle-related and/or surroundings-related and/or environment-related status parameters.

3. The motor vehicle according to claim 1 or 2, wherein the control by the control device (200) is dictated such that even in the event of the vehicle behavior prediction projecting a change in operating conditions, emissions are kept below predefined limits by the predictive control of the setting device (220).

4. The motor vehicle according to one of the preceding claims, wherein the control device (200) controls at least one component (130, 140) of an exhaust gas treatment device so as to be prepared for an impending change in operating conditions.

5. The motor vehicle according to one of the preceding claims, wherein the control device (200) controls the at least one setting device (220) such that the fuel consumption is at least briefly increased relative to the minimum value possible for a respective operating point so as to thereby minimize the pollutant emissions of the motor vehicle (1) over the medium term.

6. The motor vehicle according to one of the preceding claims, wherein a conclusion can be drawn as to how a component (130, 140) of an exhaust gas treatment device will behave from the at least one emission-related parameter.

7. The motor vehicle according to one of the preceding claims, wherein the emission prediction provides an indication of:
(i) whether and/or how the pollutant emissions of the internal combustion engine (110) will change within a forecast period as a result of the vehicle behavior prediction; and/or
(ii) whether and/or how the behavior of at least one component (130, 140) of an exhaust gas treatment device will change; and/or
(iii) how the at least one component (130, 140) of the exhaust gas treatment device will behave in view of a possible change in the pollutant emissions of the internal combustion engine (110).

8. The motor vehicle according to one of the preceding claims, wherein the control device (200) generates the emission prediction at time t₀ and predicts a change of the vehicle behavior and/or the behavior of at least one component (130, 140) of an exhaust gas treatment device at time t₁, wherein the control is initiated at time t_{A}, whereby t₀ ≤ t_{A} < t₁.

9. The motor vehicle according to claim 8, wherein t_{A} is determined by the control device (200) so as to optimize drivability on the one hand and the behavior of a component (130, 140) of an exhaust gas treatment device on the other hand.

10. The motor vehicle according to one of the preceding claims, wherein the first sensor device (210a, 210b, 210c) is selected from among the group comprising: sensor apparatus of the drivetrain, driver assistance systems, in particular radar, lidar, ultrasonic and/or camera systems, navigation devices, weather sensor devices, driving mode switches and/or driver interfaces, in particular pedal systems, gear selection, turn signals and/or windshield wipers.

11. The motor vehicle according to one of the preceding claims further comprising a display device provided for displaying at least one operating mode of the motor vehicle to a third party, in particular visually and/or acoustically and/or by means of wireless data transmission, particularly radio communication.

12. The motor vehicle according to one of the preceding claims, wherein the drive system and/or the first sensor device (210a, 210b, 210c) and/or the setting device (220) and/or the control device (200) are designed as retrofittable and/or subsequently configurable components.

13. A method for the predictive control of a motor vehicle (1) comprising at least one first drive motor designed as an internal combustion engine (110) and having a plurality of modifiable control variables and at least one setting device (220) provided for changing at least one of the modifiable control variables of the internal combustion engine (110),
comprising the steps:
(a) detecting and providing at least one vehicle-related and/or surroundings-related and/or environment-related status parameter;
(b) receiving and processing the provided vehicle-related and/or surroundings-related and/or environment-related status parameter;
(c) calculating a vehicle behavior prediction in consideration of said status parameter;
(d) calculating an emission prediction based on said vehicle behavior prediction;
(e) evaluating the emission prediction on the basis of predefined criteria; and
(f) deriving a control value or control set for controlling the setting device on the basis of the emission prediction,
wherein the vehicle behavior prediction comprises a short-term prediction and a long-term prediction;
wherein a forecast horizon for the short-term prediction is in the range of from 10 ms to 10 s; and
wherein the long-term prediction covers a forecast horizon of from 1 min to 20 min or longer.

14. The method according to claim 13, wherein the emission prediction is calculated at time t₀ and a change of the vehicle behavior and/or the behavior of at least one component (130, 140) of an exhaust gas treatment device is predicted at time t₁, wherein the control is initiated at time t_{A}, whereby t₀ ≤ t_{A} < t₁.

15. The method according to one of claims 13 or 14, wherein the control device (200) can control said at least one setting device (220) such that the fuel consumption is at least briefly increased relative to the minimum value possible for a respective operating point so as to thereby minimize the pollutant emissions of the motor vehicle (1) over the medium term,
and/or
the steps of the method are implemented by devices in a motor vehicle (1) according to one of claims 1 to 12.

## Revendications

1. Véhicule automobile (1) avec :
un système d'entraînement, lequel présente au moins un premier moteur d'entraînement, qui est réalisé sous la forme d'un moteur à combustion interne (110), dans lequel le moteur à combustion interne (110) présente une pluralité de grandeurs de réglage pouvant être modifiées ;
au moins un premier dispositif de capteur (210a, 210b, 210c), lequel est prévu pour détecter au moins un paramètre d'état concernant le véhicule et/ou les environs et/ou l'environnement et pour fournir une valeur de données représentant celui-ci ;
au moins un dispositif de réglage (220), lequel est prévu pour modifier au moins une des grandeurs de réglage, pouvant être modifiées, du moteur à combustion interne (110) ;
au moins un dispositif de commande (200), lequel est mis au point pour traiter les valeurs de données du premier dispositif de capteur (210a, 210b, 210c) et pour transmettre un signal au dispositif de réglage (220),
dans lequel le dispositif de commande (200) est prévu pour
(a) recevoir et traiter l'au moins un paramètre d'état fourni concernant le véhicule et/ou les environs et/ou l'environnement ;
(b) calculer une prévision de comportement de véhicule en tenant compte desdits paramètres d'état ;
(c) créer une prévision d'émissions en utilisant ladite prévision de comportement de véhicule ;
(d) évaluer la prévision d'émissions à l'aide de critères prédéfinis ; et
(e) déduire, sur la base de ladite prévision d'émissions, une valeur de commande ou en ensemble de commande servant à piloter le dispositif de réglage (220),
dans lequel la prévision de comportement de véhicule présente une prévision à court terme ou une prévision à long terme,
dans lequel une période prévisionnelle de la prévision à court terme se situe dans la plage allant de 10 ms à 10 s ; et
dans lequel la prévision à long terme détecte une période prévisionnelle allant de 1 min à 20 min ou plus.

2. Véhicule automobile selon la revendication 1, dans lequel les critères prédéfinis peuvent être modifiés en fonction d'au moins un paramètre d'état concernant le véhicule et/ou les environs et/ou l'environnement.

3. Véhicule automobile selon l'une quelconque des revendications 1 ou 2, dans lequel le pilotage est défini par le dispositif de commande (200) de telle sorte que les émissions sont maintenues à un niveau inférieur à des valeurs limites prédéfinies également dans le cas d'un changement, prévu dans la prévision de comportement de véhicule, des conditions de fonctionnement par un pilotage prédictif du dispositif de réglage (220).

4. Véhicule automobile selon l'une quelconque des revendications précédentes, dans lequel le dispositif de commande (200) pilote au moins un composant (130, 140) d'un dispositif de traitement ultérieur de gaz d'échappement de telle sorte qu'il est préparé à un changement imminent des conditions de fonctionnement.

5. Véhicule automobile selon l'une quelconque des revendications précédentes, dans lequel le dispositif de commande (200) pilote ledit au moins un dispositif de réglage (220) de telle sorte que la consommation de carburant est augmentée au moins à court terme par rapport à la valeur minimale éventuelle pour le point de fonctionnement respectif afin de minimiser les rejets de polluants du véhicule automobile (1) à moyen terme.

6. Véhicule automobile selon l'une quelconque des revendications précédentes, dans lequel une indication concernant le comportement d'un composant (130, 140) d'un dispositif de traitement ultérieur de gaz d'échappement peut être fournie par au moins un paramètre concernant les émissions.

7. Véhicule automobile selon l'une quelconque des revendications précédentes, dans lequel la prévision des émissions fournit une indication sur la question de savoir
(i) si les émissions de polluants du moteur à combustion interne (110) varient sur une durée de prévision en tant qu'un résultat de la prévision de comportement de véhicule et/ou comment ;
(ii) si le comportement d'au moins un composant (130, 140) d'un dispositif de traitement ultérieur des gaz d'échappement varie et/ou comment ; et/ou
(iii) comment l'au moins un composant (130, 140) du dispositif de traitement ultérieur de gaz d'échappement se comportera eu égard à un changement éventuel des rejets de polluants du moteur à combustion interne (110).

8. Véhicule automobile selon l'une quelconque des revendications précédentes, dans lequel le dispositif de commande (200) forme la prévision d'émissions à un moment t₀ et une modification du comportement de véhicule et/ou du comportement d'au moins un composant (130, 140) d'un dispositif de traitement ultérieur de gaz d'échappement est prévue au moment t₁, dans lequel le lancement du pilotage est effectué au moment t_{A}, dans lequel t₀ ≤ t_{A} < t₁.

9. Véhicule automobile selon la revendication 8, dans lequel t_{A} est défini par le dispositif de commande (200) de telle sorte que d'une part la capacité de déplacement et d'autre part le comportement d'un composant (130, 140) d'un dispositif de traitement ultérieur de gaz d'échappement sont optimisés.

10. Véhicule automobile selon l'une quelconque des revendications précédentes, dans lequel le premier dispositif de capteur (210a, 210b, 210c) est choisi parmi le groupe constitué de : dispositifs de capteur de la chaîne cinématique, systèmes d'assistance au conducteur, en particulier, radar, lidar, ultrasons et/ou systèmes de caméra, dispositifs de navigation, dispositifs de capteur météo, commutateurs de mode de conduite, et/ou interfaces conducteur, en particulier les pédales, le passage de vitesses, les clignotants et/ou les essuie-glaces.

11. Véhicule automobile selon l'une quelconque des revendications précédentes, présentant par ailleurs un dispositif d'affichage, lequel est prévu pour afficher à un tiers au moins un mode de fonctionnement du véhicule automobile, en particulier de manière optique et/ou acoustique et/ou au moyen d'une transmission de données sans fil, en particulier par radio.

12. Véhicule automobile selon l'une quelconque des revendications précédentes, dans lequel le système d'entraînement et/ou le premier dispositif de capteur (210a, 210b, 210c) et/ou le dispositif de réglage (220) et/ou le dispositif de commande (200) sont réalisés sous la forme de composants pouvant être équipés ultérieurement et/ou pouvant être configurés ultérieurement.

13. Procédé servant à piloter de manière prédictive un véhicule automobile (1) avec au moins un premier moteur d'entraînement, qui est réalisé sous la forme d'un moteur à combustion interne (110) et présente une pluralité de grandeurs de réglage pouvant être modifiées, et avec au moins un dispositif de réglage (220), lequel est prévu pour modifier au moins une des grandeurs de réglage pouvant être modifiées du moteur à combustion interne (110),
avec les étapes
(a) de détection et de fourniture d'au moins un paramètre d'état concernant le véhicule et/ou les environs et/ou l'environnement ;
(b) de réception et de traitement du paramètre d'état fourni concernant le véhicule et/ou les environs et/ou l'environnement ;
(c) de calcul d'une prévision de comportement de véhicule en tenant compte dudit paramètre d'état ;
(d) de calcul d'une prévision d'émissions en utilisant la prévision de comportement de véhicule ;
(e) d'évaluation de la prévision d'émissions à l'aide de critères prédéfinis ; et
(f) de déduction d'une valeur de commande ou d'un jeu de commande pour piloter le dispositif de réglage sur la base de la prévision des émissions,
dans lequel la prévision de comportement de véhicule présente une précision à court terme et une prévision à long terme,
dans lequel une période prévisionnelle de la prévision à court terme se situe dans la plage allant de 10 ms à 10 s ; et
dans lequel la prévision à long terme détecte une période prévisionnelle allant de 1 min à 20 min ou plus.

14. Procédé selon la revendication 13, dans lequel la prévision des émissions est calculée à un moment t₀ et une modification du comportement de véhicule et/ou du comportement d'au moins un composant (130, 140) d'un dispositif de traitement ultérieur des gaz d'échappement est prévu au moment t₁, dans lequel le lancement du pilotage est effectué au moment t_{A}, dans lequel t₀ ≤ t_{A} < t₁.

15. Procédé selon l'une quelconque des revendications 13 ou 14, dans lequel le dispositif de commande (200) peut piloter ledit au moins un dispositif de réglage (220) de telle sorte que la consommation de carburant est augmentée au moins à court terme par rapport à la valeur minimale possible pour un point de fonctionnement respectif afin de minimiser ainsi les rejets de polluants du véhicule automobile (1) à moyen terme,
et/ou
dans lequel les étapes du procédé sont exécutées par des dispositifs dans un véhicule automobile (1) selon l'une quelconque des revendications 1 à 12.
